# EUROPEAN PATENT APPLICATION

(11) **EP 1 763 242 A1**
(43) Date of publication of application: **14.03.2007**
(21) Application number: 06014593.5
(22) Date of filing: 13.07.2006
(51) Int. Cl.: H04N 7/14

(54) **Method for performing video communication service and mobile communication terminal employing the same**

(30) Priority: 08.09.2005 KR 20050083569
(71) Applicant: Samsung Electronics Co., Ltd., Yeongtong-gu Suwon-si, Gyeonggi-do (KR)
(72) Inventor: Nam, Soo-Young c/o Samsung Electronics Co., Ltd., Suwon-si Geyonggi-do (KR); Lim, Chae-Whan c/o Samsung Electronics Co., Ltd., Suwon-si Geyonggi-do (KR)
(74) Representative: Lang, Johannes

(57) **Abstract**

Disclosed is a method for performing a video communication service in a mobile communication terminal, including: presetting image data for substituting for video data transmitted from a transmission-side terminal; determining if the video data transmitted from the transmission-side terminal are abnormal data in video communication; and when the video data are abnormal data, replacing the video data with the preset image data and displaying the image data. When video data transmitted from a transmission-side terminal are abnormal data in video communication, image data set by a user are output instead of the abnormal data, so that a video communication service can be performed without the stoppage or distortion of a video data output screen. When any video data are not transmitted from a transmission-side terminal in video communication, image data set by a user are displayed so that a video communication service even can be efficiently performed.

## Description

### BACKGROUND OF THE INVENTION

### Field of the Invention

The present invention relates generally to a method and mobile terminal for performing a video communication service. More specifically, the present invention relates to a method and mobile communication terminal for performing a video communication service when abnormal video data are transmitted from a transmission-side terminal in video communication.

### Description of the Related Art

Mobile communication terminals now have the ability of performing high speed data communication in addition to voice communication. For example, if a mobile communication network of an IMT 2000 standard is constructed, it is possible to perform high speed data communication, in addition to voice communication, by means of a mobile communication terminal. Data processed by a mobile communication terminal capable of performing data communication may include packet data and image data. Further, cameras and TV receivers have been installed in mobile communication terminals in order to display moving picture signals. Accordingly, a mobile communication terminal equipped with a camera may photograph images as well as display moving and still pictures. It may also transmit photographed images to another terminal.

A mobile communication terminal including a video communication function may perform video transmission and reception together with audio transmission and reception. Furthermore, the mobile communication terminal may transmit user video data, i.e. video data, receive video data of a communication partner and display the received video data, as well as perform communication.

In a video communication method using the mobile communication terminal capable of performing the video communication as described above, control data are inserted into voice and video data after being compressed by means of a data service function, and the control data are transmitted/received through a traffic channel. However, the reliability of communication, the Quality of Service (QoS), is not ensured due to delay, jitter, etc., by channel characteristics. Accordingly, in order to detect the loss of data occurring in such a transmission/reception process and perform real-time streaming, a transmission-side terminal uses a predetermined protocol.

The loss of voice and video data as described above mainly occurs during transmission through wired environments. In order to overcome this problem, the transmission-side terminal transmits data together with control data used for checking an error by means of protocols such as a Real-time Transport Protocol (RTP), an H.324M, an H.323, and an SIP. Among these protocols, the H.324M corresponds to an International Telecommunication Union-Telecommunication standardization sector (ITU-T) video communication standard, which is a protocol used when a transmission-side terminal based on a Wideband Code Division Multiple Access (WCDMA) scheme transmits compressed voice and video data.

In the meantime, if a reception-side terminal is located in a handoff area or a weak electric field area having weak electric wave in video communication, video data displayed on a display unit of the reception-side terminal, that is, video data transmitted from a transmission-side terminal, may be intermittently stopped, or displayed video may be distorted. This reduces an advantage of video communication in which terminal users can communicate with each other while seeing video data (e.g., a face).

When a transmission-side terminal does not transmit video data, a reception-side terminal must perform video communication without displaying any video data on its display unit because there are no received data.

When a transmission-side terminal transmits video data and stops transmitting the video data, a reception-side terminal can only continuously display a frozen screen consisting of the video data which was previously displayed.

Accordingly, there is a need for an improved method and mobile terminal for performing video communication service.

### SUMMARY OF THE INVENTION

Exemplary embodiments of the present invention address at least the above problems and/or disadvantages and provide at least the advantages described below. Accordingly, exemplary aspects of the present invention solve the above-mentioned problems occurring in the prior art, and it is an object of the present invention to provide a method and mobile terminal for performing a video communication service, in which, when abnormal video data are transmitted from a transmission-side terminal in video communication, the stoppage or distortion of a video data output screen can be prevented.

According to an exemplary embodiment of the present invention, there are provided a method and mobile terminal for efficiently performing a video communication service even when no video data are transmitted from a transmission-side terminal in video communication.

According to an exemplary embodiment of the present invention, there are provided a method and mobile terminal for performing a video communication service, wherein image data, for substituting for video data transmitted from a transmission-side terminal, are preset; whether the video data transmitted from the transmission-side terminal are abnormal data when the mobile communication terminal performs video communication is determined; and, when the video data are abnormal data, the video data is replaced with the preset image data and the image data is displayed.

According to an exemplary embodiment of the present invention, a method and mobile terminal are provided for performing a video communication service in which, : image data, for substituting for video data transmitted from a transmission-side terminal, is preset; video data transmitted from the transmission-side terminal when the mobile communication terminal is in a video communication mode is received; and the preset image data is displayed when the video data are not received for a predetermined time.

### BRIEF DESCRIPTION OF THE DRAWINGS

The above and other objects, features and advantages of certain exemplary embodiments of the present invention will be more apparent from the following description taken in conjunction with the accompanying drawings, in which:
FIG. 1 is a block diagram illustrating the construction of a mobile communication terminal according to an exemplary embodiment of the present invention;
FIG. 2 is a flow diagram illustrating the operation process of a mobile communication terminal according to an exemplary embodiment of the present invention;
FIG. 3 is a flow diagram illustrating in detail a process for determining if video data received from a transmission-side terminal are abnormal data in the process in FIG. 2 according to an exemplary embodiment of the present invention;
FIG. 4 is a flow diagram illustrating in detail a process for determining if video data are abnormal data in the process in FIG. 2 according to another exemplary embodiment of the present invention;
FIG. 5 is a flow diagram illustrating in detail a process for replacing video data with image data and displaying the image data in the process in FIG. 2; and
FIG. 6 is a flow diagram illustrating the operation process of a mobile communication terminal according to another exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

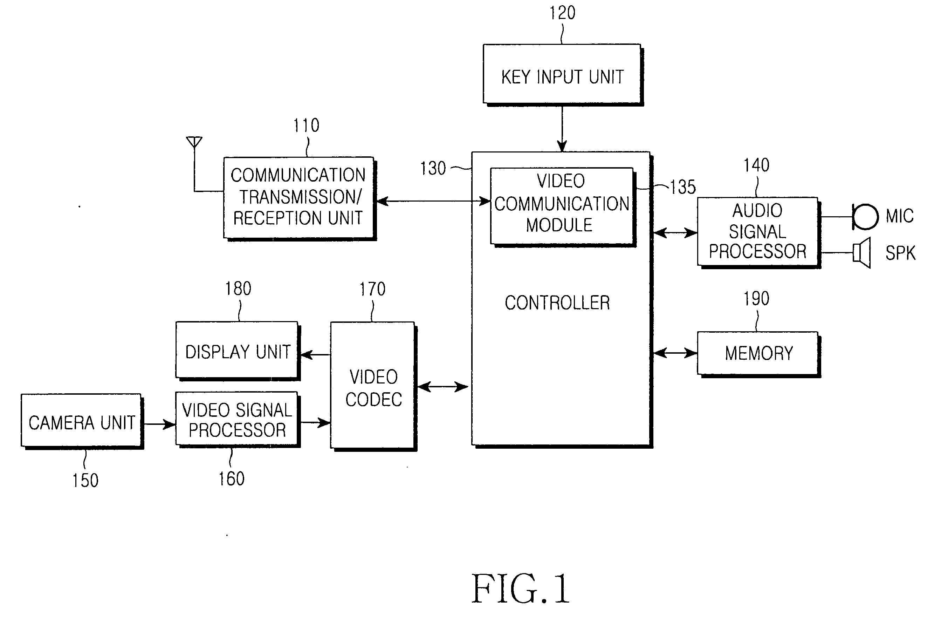

FIG. 1 is a block diagram illustrating the construction of a mobile communication terminal according to an embodiment of the present invention. It is assumed that the mobile communication terminal uses a Wideband Code Division Multiple Access (WCDMA) scheme in order to perform video communication.

Referring to FIG. 1, the mobile communication terminal 100 includes a communication transmission/reception unit 110, a key input unit 120, a controller 130, a video communication module 135, an audio signal processor 140, a camera unit 150, a video signal processor 160, a video codec 170, a display unit 180, and a memory 190.

The communication transmission/reception unit 110 transfers video communication signals received through an antenna to the controller 130, and transmits video communication signals through the antenna under the control of the controller 130.

The key input unit 120 may have a key matrix structure, including a character key, a number key, various function keys, and the like, and outputs key input signals, corresponding to keys pressed by a user, to the controller 130.

The controller 130 controls the general operation of the mobile communication terminal according to an exemplary embodiment of the present invention, which may include a video communication module 135.

When the mobile communication terminal 100 is in a video communication mode, the controller 130 presets image data which will substitute for video data transmitted from a transmission-side terminal. The image data may include a moving picture and a still picture.

The controller 130 allows image data, selected by a user from image data stored in the memory 190, to respectively correspond to phone numbers registered in a phone book of the memory 190 as the preset image data, or sets the image data according to groups registered in the phone book.

The controller 130 determines if the video data transmitted from the transmission-side terminal in the video communication mode are normal or abnormal data. When the video data are abnormal data, the controller 130 displays the preset image data on the display unit 180.

If the video data transmitted from the transmission-side terminal in the video communication mode are not received for a time period (e.g., 1 second or 2 seconds), the controller 130 displays the preset image data on the display unit 180 so as to control the video communication to be performed with the transmission-side terminal.

The video communication module 135 demodulates and decodes the video communication signals received in the communication transmission/reception unit 110, and divides the processed signals into an audio source and a video source. Then, the video communication module 135 outputs the audio source and the video source to the audio signal processor 140 and the video codec 170, respectively.

Further, the video communication module 135 modulates both the video source encoded by the video codec 170 and the audio source encoded by the audio signal processor 140, and outputs the modulated sources to the communication transmission/reception unit 110.

The audio signal processor 140 decodes the audio source output from the controller 130 into audio signals, converts the audio signals into analog signals, and outputs the analog signals through a speaker. Further, the audio signal processor 140 converts voice signals input through a microphone into digital signals, encodes the digital signals into an audio source, and outputs the audio source.

The audio signal processor 140 may include codecs. These codecs may be a data codec for processing packet data, and the like, and an audio codec for processing audio signals such as voice. These codecs may be included in the controller 130.

The camera unit 150 converts optical signals of an object photographed through its lens into electrical image signals, and outputs the electrical image signals to the video signal processor 160.

The video signal processor 160 converts the electrical image signals input from the camera unit 150 into video signals, which are digital signals, and outputs the video signals to the video codec 170.

The video codec 170 compresses the video signals input from the video signal processor 160, encodes the compressed video signals into a video source, and outputs the encoded video source to the controller 130.

The display unit 180 may be constructed of a Liquid Crystal Display (LCD), and the like, and outputs various display data generated in the mobile communication terminal. If the display unit 180 has a touch screen function, the display unit 180 may also operate as an input unit.

The memory 190 may include a program memory and a data memory, and stores both various information necessary for controlling the operation of the mobile communication terminal 100 and various information selected based on user selection information. That is, the memory 190 includes both a Read Only Memory (ROM) for storing an operation algorithm accessed through the controller 130 for the generation operation of the mobile communication terminal 100, and a Random Access Memory (RAM) for storing data according to a control command in a data processing process of the controller 130.

When the mobile communication terminal 100 performs the video communication under the control of the controller 130, the memory 190 stores the image data which will substitute for the video data transmitted from the transmission-side terminal. The image data may be stored in such a manner that they correspond to each phone number registered in the phone book. When the phone numbers have been registered according to groups, the image data may also be stored corresponding to the groups.

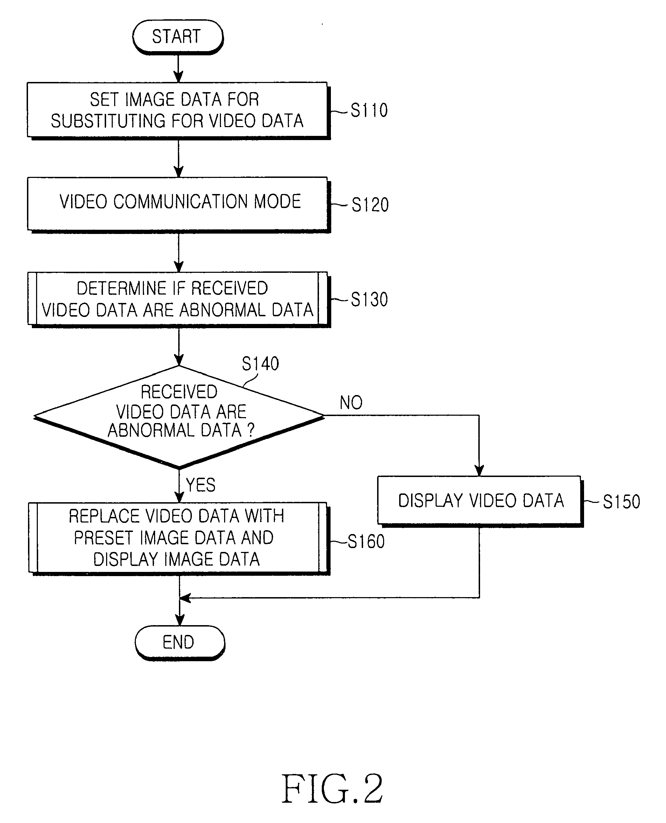

FIG. 2 is a flow diagram illustrating the operation process of a mobile communication terminal according to an exemplary embodiment of the present invention.

Referring to FIGs. 1 and 2, when the mobile communication terminal 100 performs video communication, the controller 130 sets image data which will substitute for video data transmitted from a transmission-side terminal (S 110). The image data may be either a moving picture or a still picture. Further, the image data may be downloaded from an external apparatus, or may also be photographed through the camera unit 150 by a user.

The controller 130 may set the image data according to phone numbers registered in the phone book. That is, when setting the image data, the controller 130 allows predetermined image data to correspond to each phone number registered in the phone book. When the phone numbers have been registered according to groups, the controller 130 may also set the image data according to the groups.

When the phone number of the transmission-side terminal is either a phone number having not yet been registered in the phone book or is a phone number for which the image data has not yet been set, the controller 130 may set default image data to be displayed on the display unit 180.

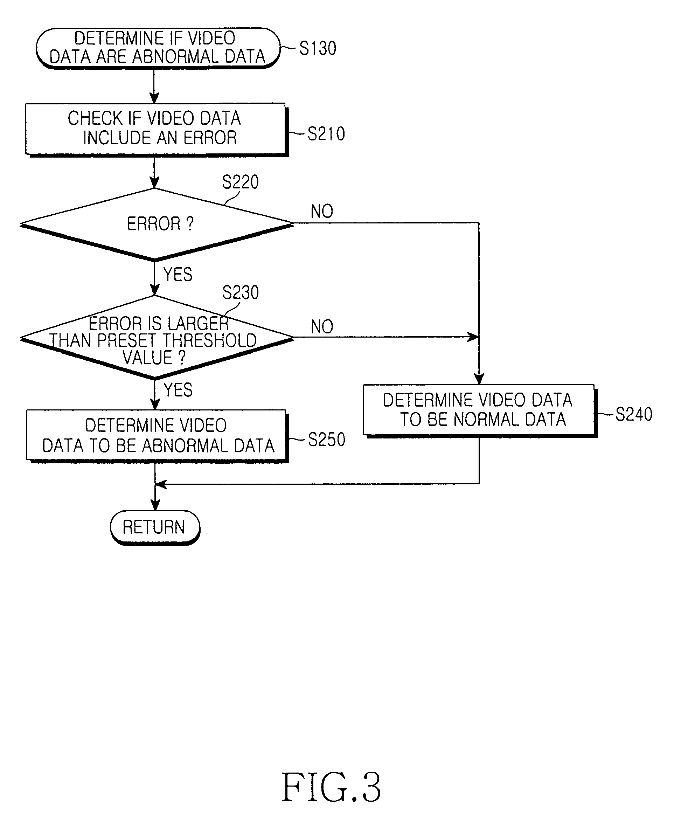

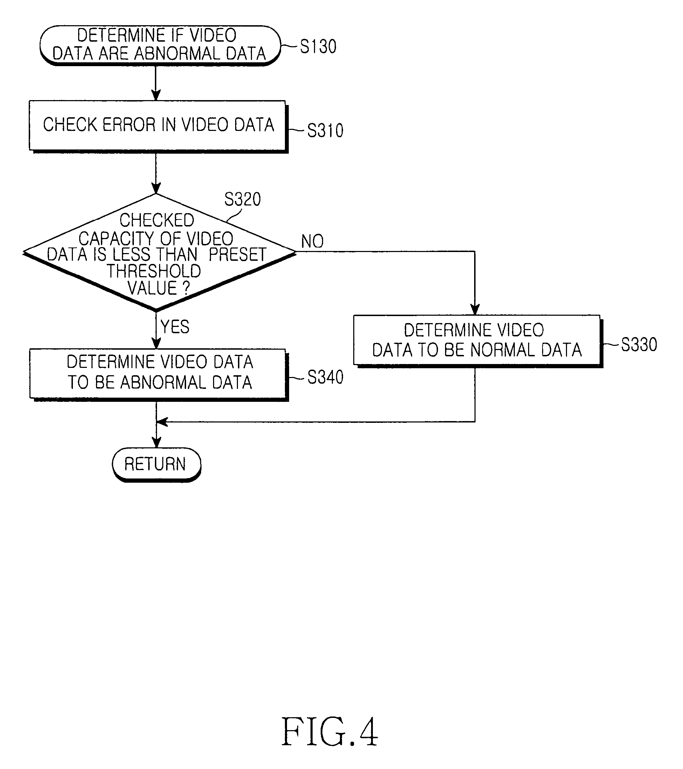

In video communication mode (S120), the controller 130 determines if the video data received from the transmission-side terminal (S 120) are normal or abnormal data (S130). That is, the controller 130 determines if the video data include an error, or include reduced capacity due to the loss of the video data. Step 130 will be described in more detail later with reference to FIGs. 3 and 4.

When the transmitted video data are normal data in step S140, the controller 130 displays the received video data on the display unit 180 (S150).

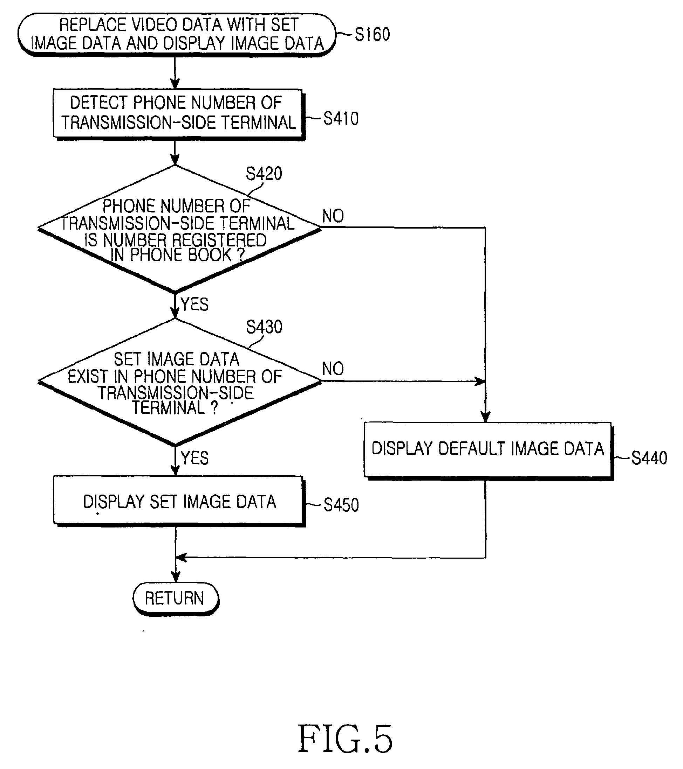

However, when the transmitted video data are abnormal data in step S140, the controller 130 replaces the video data with the preset image data and displays the image data on the display unit 180 (S 160). Step 160 will be described in more detail later with reference to FIG. 5.

FIG. 3 is a flow diagram illustrating in detail a process for determining if the video data received from the transmission-side terminal are abnormal data in the process in FIG. 2 according to an exemplary embodiment of the present invention. That is, FIG. 3 is a flow diagram illustrating in detail step 130 in FIG. 2.

Referring to FIGs. 1 and 3, the controller 130 checks if the video data received from the transmission-side terminal in a video communication mode include an error (S210).

Hereinafter, the operation of the transmission-side terminal will be described.

Video data input through a camera of the transmission-side terminal are encoded through a video codec. Then, the transmission-side terminal adds a sequential number representing a transmission order to the encoded data, and multiplexes the encoded data, thereby generating a series of data sequence. The transmission-side terminal generates a Cyclic Redundancy Checking (CRC), adds the CRC to the encoded data so that a reception-side terminal can check if data include an error, and transmits the data sequence to the reception-side terminal through a wireless network. Since the process is written in the specification of an H.323, which belongs to an H.324M protocol, a detailed description will be omitted.

When the video data are transmitted from the transmission-side terminal, the controller 130 demultiplexes the header of the video data, and checks the sequential number and the CRC, thereby checking if the video data include an error (S220).

When the video data do not include an error in step 220, the controller 130 determines that the video data are normal data and returns to step 140 in FIG. 2 (S240).

However, when the video data include an error, the controller 130 checks if the error is larger than a preset threshold value (S230).

When the error is less than the preset threshold value, step 240 is performed. However, when the error is larger than the preset threshold value, the controller 130 determines that the video data are abnormal data and returns to step 140 in FIG. 2 (S250).

FIG. 4 is a flow diagram illustrating in detail a process for determining if the video data are abnormal data in the process in FIG. 2 according to another embodiment of the present invention.

Referring to FIGs. 1 and 4, the controller 130 checks the capacity of video data received from a transmission-side terminal in a video communication mode (S310). The controller 130 can check the capacity of the received data by monitoring the data, which are received in predetermined time intervals, at regular time intervals. This is because the data received in the communication transmission/reception unit 110 has a constant speed of about 64 kbps.

If the checked capacity of the video data is larger than a preset threshold value (S320), the controller 130 determines that the video data are normal data and returns to step 140 in FIG. 2 (S330).

However, if the checked capacity of the video data is less than the preset threshold value (S320), the controller 130 determines that the video data are abnormal data and returns to step 140 in FIG. 2 (S340).

FIG. 5 is a flow diagram illustrating in detail a process for replacing the video data with the image data and displaying the image data in the process in FIG. 2. That is, FIG. 5 is a flow diagram illustrating in detail step 160 in FIG. 3.

Referring to FIGs. 2 and 5, if the controller 130 determines that the video data received from the transmission-side terminal are abnormal data, the controller 130 detects the phone number of the transmission-side terminal (S410).

The controller 130 determines if the detected phone number corresponds to a phone number registered in the phone book of the memory 190 (S420). If the detected phone number has not been registered in the phone book, the controller 130 detects default image data and displays the default image data on the display unit 180 (S440).

However, if the detected phone number has been registered in the phone book, the controller 130 determines if image data having been set corresponding to the phone number exist in the memory 190 (S430). If the image data having been set corresponding to the phone number do not exist in the memory 190, step 440 is performed.

If the image data having been set corresponding to the phone number exist in the memory 190, the controller 130 replaces the video data with the set image data and displays the image data on the display unit 180 (S450).

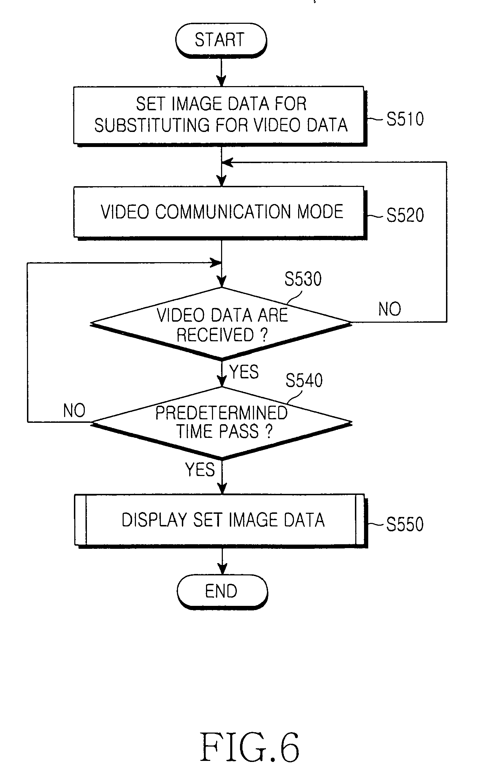

FIG. 6 is a flow diagram illustrating the operation process of the mobile communication terminal according to another exemplary embodiment of the present invention.

Referring to FIGs. 1 and 6, when the mobile communication terminal performs video communication, the controller 130 sets image data (e.g. a still or moving picture) which will substitute for video data received from a transmission-side terminal (S510). The image data may include data photographed through the camera unit 150 by a user, or may be downloaded from an external apparatus.

The controller 130 may also set the image data according to phone numbers or groups registered in a phone book.

When the phone number of a transmission-side terminal is either a phone number having not been registered in the phone book or is a phone number for which the image data has not yet been set, the controller 130 may set default image data to be displayed on the display unit 180.

When the mobile communication terminal is in the video communication mode (S520), the controller 130 determines if video data have been received from the transmission-side terminal (S530). That is, the controller 130 determines if the video data have been received.

When the video data have not been received, the controller 130 operates a timer and determines if the video data are received before a predetermined time (e.g. 1 second or 2 seconds) passes (S540).

When the video data are not received before the predetermined time passes, the controller 130 displays the video data set in step 510 on the display unit 180 (S550). Step 550 is similar to step 160 in FIG. 2.

When the video data are not received before the predetermined time period passes, the controller 130 determines if the phone number of the transmission-side terminal is a phone number having been registered in the phone book of the memory 190. When the phone number is the phone number having been registered in the phone book, the controller 130 determines if image data having been set for the phone number exist. When corresponding image data exist, the controller 130 displays the image data on the display unit 180.

According to exemplary embodiments of the present invention as described above, when video data transmitted from a transmission-side terminal are abnormal data in video communication, image data set by a user are output instead of the abnormal data, so that a video communication service can be performed without the stoppage or distortion of a video data output screen. Further, according to the exemplary embodiments of the present invention, when any video data are not transmitted from a transmission-side terminal in video communication, image data set by a user are displayed, so that a video communication service even can be efficiently performed.

Although exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method of communication in a mobile terminal comprising:
presetting image data for substituting for video data transmitted from a transmission-side terminal;
determining if video data transmitted from the transmission-side terminal comprises abnormal data; and
displaying the image data when the transmitted data comprises abnormal data.

2. The method of claim 1, wherein the image data comprises one of a still picture and a moving picture.

3. The method of claim 1, wherein presetting the image data comprises setting image data corresponding to information in a memory.

4. The method of claim 3, wherein the memory comprises a phone book and the information comprises groups in the phone book.

5. The method of claim 1, wherein determining if video data comprises abnormal data comprises:
checking if video data transmitted from the transmission-side terminal comprises an error; and
determining the video data comprises abnormal data if the error is larger than a predetermined threshold.

6. The method of claim 1, wherein determining if video data comprises abnormal data comprises:
checking capacity of video data transmitted from the transmission-side terminal; and
determining the video data comprises abnormal data if the capacity is less
than a predetermined threshold.

7. The method of claim 1, wherein displaying the image data comprises:
determining if terminal information of the transmission-side terminal corresponds to information in a memory;
determining if image data corresponding to the information in the memory exist when the terminal information of the transmission-side terminal corresponds to information in the memory; and
displaying the image data when the image data exist.

8. The method of claim 7, further comprising a sub-step of, when the terminal information of the transmission-side terminal does not correspond to information in a memory, displaying default image data.

9. The method of claim 7, wherein, displaying the image data comprises displaying default image data when the corresponding image data does not exist.

10. A method of communication in a mobile terminal comprising :
presetting image data for substituting for video data transmitted from a transmission-side terminal;
receiving video data from the transmission-side terminal; and
displaying the image data when the video data are not received for a time period.

11. The method of claim 10, wherein the image data comprises one of a still picture and a moving picture.

12. The method of claim 10, wherein presetting image data comprises setting image data corresponding to information in a memory.

13. The method of claim 12, wherein the memory comprises a phone book and the information comprises groups in the phone book.

14. The method of claim 10, wherein displaying the image data comprises:
determining if terminal information of the transmission-side terminal corresponds to information in a memory ;
determining if image data corresponding to the information in the memory exist when the terminal information of the transmission-side terminal corresponds to the information in the memory; and
displaying the image data when the image data exist.

15. The method of claim 14, further comprising a sub-step of, when the terminal information of the transmission-side terminal does not correspond to information in a memory displaying default image data.

16. The method of claim 14, wherein displaying the image data comprises displaying default image data when the corresponding image data does not exist.

17. The method of claim 3, wherein the memory comprises a phone book and the information comprises phone numbers in the phone book.

18. The method of claim 1, wherein displaying the image data further comprises replacing the video data with the image data.

19. The method of claim 7, wherein displaying the image data further comprises replacing the video data with the image data.

20. The method of claim 7, wherein the terminal information is a phone number, the memory comprises a phone book and the corresponding information in the memory is a phone number registered in the phone book.

21. The method of claim 8, wherein displaying default image data further comprises replacing the video data with the default image data.

22. The method of claim 9, wherein displaying default image data further comprises replacing the video data with the default image data.

23. A wireless communication terminal comprising:
a controller;
a receiver; and
a display;
wherein, the controller sets image data, determines if video data received from another terminal comprises abnormal data and displays the set image data when the received video data comprises abnormal data.

24. The wireless communication terminal of claim 23, further comprising a memory.
